(19) **Europäisches Patentamt**
**European Patent Office**
**Office européen des brevets**

(11) **EP 4 468 390 A1**

(12) **EUROPEAN PATENT APPLICATION**
published in accordance with Art. 153(4) EPC

(43) Date of publication:
**27.11.2024 Bulletin 2024/48**

(21) Application number: **23743304.0**

(22) Date of filing: **19.01.2023**

(51) International Patent Classification (IPC):
**H01M 4/13** (2010.01)  **H01M 4/139** (2010.01)
**H01M 4/36** (2006.01)  **H01M 4/62** (2006.01)
**H01M 6/18** (2006.01)  **H01M 10/052** (2010.01)
**H01M 10/0562** (2010.01)  **H01M 10/058** (2010.01)

(52) Cooperative Patent Classification (CPC):
**H01M 4/13; H01M 4/139; H01M 4/36; H01M 4/62;**
**H01M 6/18; H01M 10/052; H01M 10/0562;**
**H01M 10/058;** Y02E 60/10; Y02P 70/50

(86) International application number:
**PCT/JP2023/001461**

(87) International publication number:
**WO 2023/140311 (27.07.2023 Gazette 2023/30)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.01.2022 JP 2022008085**

(71) Applicant: **Maxell, Ltd.**
**Kyoto 618-8525 (JP)**

(72) Inventors:
• **MATSUOKA, Naoki**
  **Otokuni-gun, Kyoto 618-8525 (JP)**

• **FUJIMOTO, Akihiro**
  **Otokuni-gun, Kyoto 618-8525 (JP)**
• **FURUKAWA, Kazuki**
  **Otokuni-gun, Kyoto 618-8525 (JP)**
• **SATO, Yuta**
  **Otokuni-gun, Kyoto 618-8525 (JP)**
• **KAWABATA, Yusuke**
  **Otokuni-gun, Kyoto 618-8525 (JP)**

(74) Representative: **Diehl & Partner**
**Patent- und Rechtsanwaltskanzlei mbB**
**Erika-Mann-Straße 9**
**80636 München (DE)**

(54) **POSITIVE ELECTRODE FOR ALL-SOLID-STATE BATTERY, AND ALL-SOLID-STATE BATTERY AND METHOD FOR MANUFACTURING SAME**

(57) A positive electrode for an all-solid-state battery that can constitute an all-solid-state battery that has excellent high-temperature storage characteristics is provided. An all-solid-state secondary battery that includes the positive electrode and thus has the excellent characteristics, and a method for producing the all-solid-state secondary battery are also provided. An all-solid-state battery of the present invention relates to Sustainable Development Goals 3, 7, 11, and 12. A positive electrode of the present invention for an all-solid-state battery includes a positive electrode mixture that contains a positive electrode active material, a solid electrolyte, and a carbon material. The carbon material contains graphene. The content percentage of the solid electrolyte in the positive electrode mixture is 17 to 46% by mass. The content percentage of the graphene in the positive electrode mixture is 1.5 to 7% by mass. The percentage of the graphene in the carbon material is 70% by mass or more. An all-solid-state battery of the present invention includes an electrode body in which the positive electrode of the present invention for an all-solid-state battery, a solid electrolyte layer, and a negative electrode are stacked.

EP 4 468 390 A1

FIG. 1

## Description

Technical Field

The present invention relates to a positive electrode for an all-solid-state battery. The positive electrode for an all-solid-state battery includes a molded body of a positive electrode mixture. The present invention also relates to an all-solid-state battery that includes the positive electrode for an all-solid-state battery, and a method for producing the all-solid-state battery.

Background Art

In recent years, the development of portable electronic devices such as cellular phones and laptop personal computers, the practical use of electric vehicles, and the like have led to the need for compact and lightweight batteries that have a high capacity and a high energy density.

Among secondary batteries that currently satisfy the need, lithium-ion secondary batteries, which each include an organic electrolyte solution that contains an organic solvent and lithium salts, are particularly widely used. As the devices further progress, a longer service life and a higher capacity of the lithium-ion secondary batteries are needed while it is becoming necessary to secure high reliability of the batteries.

The organic electrolyte solution of the lithium-ion secondary batteries contains an organic solvent that is a flammable material. If a failure such as a short circuit occurs in a lithium-ion secondary battery, its organic electrolyte solution might abnormally generate heat or the battery might burn.

In such a situation, all-solid-state lithium secondary batteries (all-solid-state batteries) that do not include any organic solvent are drawing attention. The all-solid-state batteries do not include any conventional organic-solvent electrolyte, but include a molded body of a solid electrolyte that does not contain any organic solvent. The all-solid-state batteries are very safe in a high-temperature environment.

Because the all-solid-state batteries are not only very safe but also highly reliable and resistant to various environments, and have a long service life, they are expected to be maintenance-free batteries that can continue to contribute to the development and safety of society. Providing the all-solid-state batteries for society can contribute to achieving Goal 3 (to ensure healthy lives and promote well-being for all at all ages), Goal 7 (to ensure access to affordable, reliable, sustainable and modern energy for all), Goal 11 (to make cities and human settlements inclusive, safe, resilient and sustainable), and Goal 12 (to ensure sustainable consumption and production patterns) among 17 Sustainable Development Goals (SDGs) established by the United Nations.

Attempts to further improve the characteristics of the lithium-ion secondary batteries and all-solid-state batteries have been made. Patent Documents 1 to 3 each teach that using graphene as a conductive assistant of an electrode can improve the fillability and electron conductivity of the electrode mixture, and thus can improve the capacity and cycle characteristics of the battery.

Prior Art Documents

Patent Documents

    Patent Document 1: JP 2014-112540 A
    Patent Document 2: JP 2012-243645 A
    Patent Document 3: WO 2019/26940

Disclosure of Invention

Problem to be Solved by the Invention

The investigation of the present inventors revealed that a positive electrode that contains graphene as a conductive assistant in its positive electrode mixture could suffer from more rapid characteristic deterioration in a high-temperature environment.

It is an object of the present invention to provide a positive electrode for an all-solid-state battery. The positive electrode for an all-solid-state battery contains a positive electrode mixture, and is for obtaining an all-solid-state battery that has excellent high-temperature storage characteristics. Other objects of the present invention are to provide an all-solid-state secondary battery that includes the positive electrode and thus has excellent high-temperature storage characteristics, and a method for producing the all-solid-state secondary battery.

Means for Solving Problem

A positive electrode of the present invention for an all-solid-state battery (which hereinafter may be simply referred to as the "positive electrode") includes a positive electrode mixture that contains a positive electrode active material, a solid electrolyte, and a carbon material. The carbon material contains graphene. The content percentage of the solid electrolyte in the positive electrode mixture is 17 to 46% by mass. The content percentage of the graphene in the positive electrode mixture is 1.5 to 7% by mass. The percentage of the graphene in the carbon material is 70% by mass or more.

An all-solid-state battery of the present invention includes an electrode body in which a positive electrode, a solid electrolyte layer, and a negative electrode are stacked. The positive electrode is the above-described positive electrode of the present invention for an all-solid-state battery.

The all-solid-state battery of the present invention can be produced using a method of the present invention for producing the all-solid-state battery. The method includes a step to form a positive electrode. The step to form a positive electrode includes a first mixing step to mix a positive electrode active material with part of a solid electrolyte to be included in a positive electrode mixture to form a first composition, a second mixing step to mix the first composition, the remaining solid electrolyte that has not been used for the formation of the first composition, and a carbon material that contains graphene to prepare a positive electrode mixture such that the content percentage of the solid electrolyte in the positive electrode mixture is 17 to 46% by mass, and the content percentage of the graphene in the positive electrode mixture is 1.5 to 7% by mass, and the percentage of the graphene in the carbon material is 70% by mass or more, and a pressurization step to mold the positive electrode mixture under a surface pressure of 1000 MPa or more to form a molded body of the positive electrode mixture.

Effects of the Invention

The present invention can provide a positive electrode for an all-solid-state battery. The positive electrode for an all-solid-state battery includes a positive electrode mixture and is for obtaining an all-solid-state battery that has excellent high-temperature storage characteristics. The present invention can also provide an all-solid-state battery that includes the positive electrode and thus has excellent high-temperature storage characteristics, and a method for producing the all-solid-state battery.

Brief Description of Drawings

[FIG. 1] FIG. 1 is a cross-sectional view schematically illustrating an exemplary all-solid-state battery of the present invention.
[FIG. 2] FIG. 2 is a diagram for illustrating a method for producing an all-solid-state battery.
[FIG. 3] FIG. 3 is a diagram for illustrating the method for producing an all-solid-state battery.
[FIG. 4] FIG. 4 is a diagram for illustrating the method for producing an all-solid-state battery.
[FIG. 5] FIG. 5 is a diagram for illustrating the method for producing an all-solid-state battery.
[FIG. 6] FIG. 6 is a diagram for illustrating the method for producing an all-solid-state battery.
[FIG. 7] FIG. 7 is a diagram for illustrating the method for producing an all-solid-state battery.
[FIG. 8] FIG. 8 is a diagram for illustrating the method for producing an all-solid-state battery.
[FIG. 9] FIG. 9 is a diagram for illustrating the method for producing an all-solid-state battery.

Description of the Invention

An all-solid-state battery of the present invention includes an electrode body in which a positive electrode (positive electrode for an all-solid-state battery), a solid electrolyte layer, and a negative electrode are stacked. The positive electrode includes a positive electrode mixture that contains a positive electrode active material, a solid electrolyte, and a carbon material as a conductive assistant. The positive electrode mixture contains graphene as the carbon material.

If the positive electrode mixture that contains the positive electrode active material, the solid electrolyte, and the conductive assistant is compressed to be molded, a higher fillability during the pressurization can result in a larger discharge capacity. Further, the load characteristics can be improved by improving the ion conductivity and electron conductivity. Patent Documents 1 to 3 each teach that using graphene as a conductive assistant to be included in a positive electrode mixture improves the fillability of the positive electrode mixture and also improves the ion conductivity and electron conductivity of the positive electrode mixture to improve the characteristics of the positive electrode and thus provide an all-solid-state battery having excellent load characteristics.

Because the positive electrode mixture contains the graphene, which has a small thickness and is scaly, the positive electrode active material and the solid electrolyte can easily slide during pressure molding, and thus the fillability can be improved. Further, because a contact area where the graphene is in contact with the positive electrode active material increases, the electron conductivity of the positive electrode mixture can be improved.

If a positive electrode active material, a solid electrolyte, and graphene are simply mixed and molded under pressure, the resulting positive electrode cannot constitute an all-solid-state battery having excellent high-temperature storage characteristics. It is necessary to further reinvestigate, e.g., the configuration of the positive electrode to prevent the characteristics of the all-solid-state battery from deteriorating in a high-temperature environment.

Thus, according to the present invention, the content percentages of the solid electrolyte and the graphene in the positive electrode mixture are each within a certain range, and the percentage of the graphene in the carbon material as a conductive assistant contained in the positive electrode mixture is a certain percentage or more. As a result, a capacity drop and an increase in the internal resistance of the positive electrode during high-temperature storage can be suppressed, although the reason is not clear. Thus, an all-solid-state battery having excellent high-temperature storage characteristics can be configured.

All-solid-state batteries of the present invention include primary batteries and secondary batteries. Hereinafter, an example of the present invention will be described in detail.

<Positive electrode for all-solid-state battery>

A positive electrode for an all-solid-state battery includes a positive electrode mixture that contains a positive electrode active material, a solid electrolyte, and a carbon material as a conductive assistant. The positive electrode for an all-solid-state battery may include only a molded body of the positive electrode mixture, or may include a current collector and a layer of a molded body of the positive electrode mixture (positive electrode mixture layer) on the current collector.

If the positive electrode is used for a primary battery as an all-solid-state battery, its positive electrode active material may be a positive electrode active material used for conventional non-aqueous electrolyte primary batteries. Specific examples of the positive electrode active material include: manganese dioxide; lithium-containing manganese oxides (such as $LiMn_3O_6$ and complex oxides that have the same crystal structure as manganese dioxide, such as the $\beta$ type structure, the $\gamma$ type structure, or the $\beta$ type and $\gamma$ type mixture structure, and contain Li in an amount of 3.5% by mass or less, preferably 2% by mass or less, more preferably 1.5% by mass or less, and particularly preferably 1% by mass or less); lithium-containing complex oxides such as $Li_aTi_{5/3}O_4$ ($4/3 \leq a < 7/3$); vanadium oxides; niobium oxides; titanium oxides; sulfides such as iron (II) sulfide; graphite fluorides; silver sulfides such as $Ag_2S$; and nickel oxides such as $NiO_2$.

If the positive electrode is used for a secondary battery as an all-solid-state battery, its positive electrode active material may be a positive electrode active material used for conventional non-aqueous electrolyte secondary batteries, that is, an active material capable of intercalating and deintercalating lithium (Li) ions. Specific examples of the positive electrode active material include spinel-type lithium manganese complex oxides represented by $Li_{1-x}M_rMn_{2-r}O_4$ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x satisfies $0 \leq x \leq 1$, and r satisfies $0 \leq r \leq 1$), layered compounds represented by $Li_rMn_{(1-s-t)}Ni_sM_tO_{(2-u)}F_v$ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy $0 \leq r \leq 1.2$, $0 < s < 0.5$, $0 < t < 0.5$, $u + v < 1$, $-0.1 \leq u \leq 0.2$, and $0 \leq v \leq 0.1$), lithium cobalt complex oxides represented by $Li_{1-x}Co_{1-r}M_rO_2$ (where M is at least one element selected from the group consisting of Al, Mg, Ti, V, Cr, Zr, Fe, Ni, Cu, Zn, Ga, Ge, Nb, Mo, Sn, Sb, and Ba, and x satisfies $0 \leq x \leq 1$, and r satisfies $0 \leq r \leq 0.5$), lithium nickel complex oxides represented by $Li_{1-x}Ni_{1-r}M_rO_2$ (where M is at least one element selected from the group consisting of Al, Mg, Ti, Zr, Fe, Co, Cu, Zn, Ga, Ge, Nb, Mo, Sn, Sb, and Ba, and x satisfies $0 \leq x \leq 1$, and r satisfies $0 \leq r \leq 0.5$), olivine-type complex oxides represented by $Li_{1+s-x}M_{1-r}N_rPO_4F_s$ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x satisfies $0 \leq x \leq 1$, r satisfies $0 \leq r \leq 0.5$, and s satisfies $0 \leq s \leq 1$), and pyrophosphoric acid compounds represented by $Li_{2-x}M_{1-r}N_rP_2O_7$ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x satisfies $0 \leq x \leq 2$, and r satisfies $0 \leq r \leq 0.5$). These compounds may be used alone or in combination of two or more.

If the solid electrolyte of the positive electrode is a sulfide-based solid electrolyte, it is preferable that the positive electrode active material has core portions that substantially act as an active material, and surface layers that each cover the surface of corresponding one of the core portions to suppress reaction between the core portions and the sulfide-based solid electrolyte. When the positive electrode active material is directly in contact with the sulfide-based solid electrolyte in the positive electrode mixture, the sulfide-based solid electrolyte is oxidized and forms a resistance layer, which may decrease the ion conductivity in the molded body. The surface layers of the positive electrode active material cover the surfaces of the core portions of the positive electrode active material, which substantially act as an active material, to suppress reaction between the core portions and the sulfide-based solid electrolyte. Thus, it is possible to prevent the direct contact between the core portions and the sulfide-based solid electrolyte, and thus suppress the decrease in the ion conductivity in the positive electrode mixture caused by the oxidation of the sulfide-based solid electrolyte.

The core portions can each include the various materials exemplified above as positive electrode active materials for primary batteries and positive electrode active materials for secondary batteries.

It is sufficient if the surface layers each include a material that has ion conductivity and can suppress reaction between the material of the core portions and the sulfide-based solid electrolyte. Examples of the material that can be included in the surface layers include oxides that contain Li and at least one element selected from the group consisting of Nb, P, B, Si, Ge, Ti, and Zr. The more specific examples include lithium-containing niobium oxides such as LiNbOs, and $Li_3PO_4$, $Li_3BO_3$, $Li_4SiO_4$, $Li_4GeO_4$, LiTiOs, LiZrOs, and $Li_2WO_4$. The surface layers may contain only one or two or more of these oxides, or may contain a composite compound that includes two or more of the oxides. Among these oxides, the lithium-containing niobium oxides are preferable, and LiNbOs is much preferable.

Preferably, the surface layers in an amount of 0.1 to 1.0 part by mass are present on the surfaces of the core portions in an amount of 100 parts by mass. Within this range, the surface layers can suppress well reaction between the core portions and the sulfide-based solid electrolyte.

The surface layers may be formed on the surfaces of the material of the core portions using, e.g., a sol-gel process, mechanofusion, chemical vapor deposition (CVD), physical vapor deposition (PVD), and atomic layer deposition (ALD).

If the positive electrode is included in a secondary battery as an all-solid-state battery, the average particle size of the positive electrode active material is preferably 3 $\mu$m or more, and more preferably 4 $\mu$m or more, and also is preferably 10 $\mu$m or less, and more preferably 8 $\mu$m or less. If the positive electrode active material has the core portions and the surface layers, the average particle size is a particle size of a whole particle that includes the surface layer. Hereinafter, the same applies to the average particle size of the positive electrode active material that has the core portions and the surface layers. The positive electrode active material may be primary particles or secondary particles constituted by aggregated primary particles. When the positive electrode active material has an average particle size within the above range, the interface between the positive electrode active material and the solid electrolyte contained in the positive electrode is large, and thus the load characteristics of the battery are further improved.

Herein, the average particle sizes of the various particles (positive electrode active material, graphene, solid electrolytes, etc.) each mean a diameter value corresponding to the volume-based cumulative frequency of 50% ($D_{50}$) in a cumulative volume of particles that accumulates from smaller sizes and is determined with a particle size distribution measuring device, e.g., a microtrac particle size distribution measuring device "HRA9320" manufactured by Nikkiso Co., Ltd.

The solid electrolyte included in the positive electrode mixture preferably contains a sulfide-based solid electrolyte. Examples of the sulfide-based solid electrolyte include $Li_2S$-$P_2S_5$-based glass, $Li_2S$-$SiS_2$-based glass, $Li_2S$-$P_2S_5$-$GeS_2$-based glass, and $Li_2S$-$B_2S_3$-based glass. In addition, thio-LISICON-type sulfide-based solid electrolytes ($Li_{12-12a-b+c+6d-e}M^1_{3+a-b-c-d}M^2_bM^3_cM^4_dM^5_{12-e}Xe$, such as $Li_{10}GeP_2S_{12}$ and $Li_{9.54}Si_{1.74}P_{1.44}S_{11.7}Cl_{0.3}$ (where $M^1$ is Si, Ge, or Sn, $M^2$ is P or V, $M^3$ is Al, Ga, Y, or Sb, $M^4$ is Zn, Ca, or Ba, $M^5$ is S or is S and O, and X is F, Cl, Br, or I, and a, b, c, d, and e satisfy $0 \leq a < 3$, $0 \leq b + c + d \leq 3$, and $0 \leq e \leq 3$), which attract attention in recent years due to their high lithium ion conductivity, and argyrodite-type sulfide-based solid electrolytes, which are represented by, e.g., $Li_{7-f+g}PS_{6-x}Cl_{x+y}$, such as $Li_6PS_5Cl$ (where f and g satisfy $0.05 \leq f \leq 0.9$ and $-3.0f + 1.8 \leq g \leq -3.0f + 5.7$), and $Li_{7-h}PS_{6-h}Cl_iBr_j$ (where h, i, and j satisfy $h = i + j$, $0 < h \leq 1.8$, and $0.1 \leq i/j \leq 10.0$) can also be used. The positive electrode mixture may contain only one or two or more of the various sulfide-based solid electrolytes exemplified above. Among these sulfide-based solid electrolytes, the sulfide-based solid electrolytes that contain Li and P are much preferable. In particular, the argyrodite-type sulfide-based solid electrolytes, which have higher lithium ion conductivity and are chemically more stable, are further preferable.

The positive electrode mixture may contain only the sulfide-based solid electrolyte as its solid electrolyte, or may contain, in addition to the sulfide-based solid electrolyte, other solid electrolytes which will be described below. The percentage of the sulfide-based solid electrolyte in the solid electrolyte of the positive electrode mixture is preferably 80% by mass or more.

The positive electrode mixture can contain any solid electrolyte that has lithium ion conductivity. For example, the positive electrode mixture can contain hydride-based solid electrolytes, halide-based solid electrolytes, and oxide-based solid electrolytes in addition to the sulfide-based solid electrolytes described above.

Examples of the hydride-based solid electrolytes include $LiBH_4$, and a solid solution of $LiBH_4$ and the following alkali metal compound (e.g., a solid solution having a mol ratio of $LiBH_4$ to an alkali metal compound of 1:1 to 20:1). The alkali metal compound in the solid solution is, e.g., at least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amide, rubidium amide, and cesium amide.

Examples of the halide-based solid electrolytes include monoclinic LiAlCL, defective-spinel or layered LiInBr$_4$, and monoclinic Li$_{6-3m}$Y$_m$X$_6$ (where $0 < m < 2$, and X = Cl or Br). In addition, the known halide-based solid electrolytes disclosed in WO 2020/070958 and WO 2020/070955 may be used.

Examples of the oxide-based solid electrolytes include garnet-type Li$_7$La$_3$Zr$_2$O$_{12}$, NASICON-type Li$_{1+O}$Al$_{1+O}$Ti$_{2-O}$(PO$_4$)$_3$ and Li$_{1+p}$Al$_{1+p}$Ge$_{2-p}$(PO$_4$)$_3$, and perovskite-type Li$_{3q}$La$_{2/3-q}$TiO$_3$.

The average particle size of the solid electrolyte is preferably 0.1 μm or more, and more preferably 0.2 μm or more, in view of reduction of the grain boundary impedance. On the other hand, the average particle size of the solid electrolyte is preferably 10 μm or less, and more preferably 5 μm or less, in view of formation of sufficient contact interface between the positive electrode active material and the solid electrolyte.

The positive electrode mixture contains graphene as its conductive assistant. The effect of the graphene can improve the fillability of the positive electrode mixture during molding, and thus allows formation of a molded body of the positive electrode mixture that has a small porosity and thus a low internal resistance.

The average particle size of the graphene is preferably 4 μm or more, and more preferably 6 μm or more to improve the electron conductivity of the molded body of the positive electrode mixture, and also is preferably 15 μm or less, and more preferably 12 μm or less not to inhibit the ion conductivity.

The BET specific surface area of the graphene is preferably 20 m$^2$/g or more, and more preferably 22 m$^2$/g or more to improve the electron conductivity of the molded body of the positive electrode mixture, and also is preferably 35 m$^2$/g or less, and more preferably 32 m$^2$/g or less to facilitate the dispersion of the graphene in the positive electrode mixture.

The thickness of the graphene is preferably 5 nm or more to improve the electron conductivity of the molded body of the positive electrode mixture, and also is preferably 100 nm or less, and more preferably 50 nm or less to improve the fillability of the positive electrode mixture during pressurization.

Herein, the BET specific surface area of the graphene is determined according to a BET method that conforms to Japanese Industrial Standard (JIS) K 6217, and can be measured with, for example, a specific surface area measurement device "Macsorb HM model-1201" (manufactured by Mountech Co., Ltd.) using a nitrogen adsorption method.

Preferably, the average particle size of the graphene is adjusted so that B/A, where B (μm) is the average particle size of the graphene, and A (μm) is the average particle size of the positive electrode active material, is 1 or more to allow the graphene contained in the positive electrode mixture to more easily express the effect of improving the fillability of the positive electrode mixture. B/A is preferably 4 or less, more preferably 3 or less, particularly preferably 2.5 or less, and most preferably 2 or less not to inhibit the ion conductivity in the positive electrode mixture.

Although it is desirable that the positive electrode mixture contains only graphene as its conductive assistant considering the high-temperature storage characteristics, the positive electrode mixture may contain other conductive assistants together with graphene. Examples of the other conductive assistants than graphene that can be added to the positive electrode mixture include carbon materials such as graphite (natural or artificial graphite), carbon black, carbon nanofibers, and carbon nanotubes.

Because the other carbon materials than graphene are likely to be a factor in a decrease in the high-temperature storage characteristics, the percentage of graphene in carbon materials contained in the positive electrode mixture is 70% by mass or more, and the percentage of the other carbon materials than graphene in carbon materials contained in the positive electrode mixture is 30% by mass or less according to the present invention.

The positive electrode mixture may contain a binder. Specific examples of the binder include fluorocarbon resins, such as polyvinylidene fluoride (PVDF), and acrylic resins. If good moldability can be secured for molding the molded body of the positive electrode mixture without using a binder, as in the case where the positive electrode mixture contains a sulfide-based solid electrolyte, the positive electrode mixture may contain no binder.

If the positive electrode mixture contains a binder, the content of the binder is preferably 15% by mass or less, and also is preferably 0.5% by mass or more. When sufficient moldability is obtained without a binder, the content of a binder in the positive electrode mixture is preferably 0.5% by mass or less, more preferably 0.3% by mass or less, and further preferably 0% by mass (that is, the positive electrode mixture contains no binder).

The content percentage of a solid electrolyte in the positive electrode mixture is 17% by mass or more and 46% by mass or less. The content percentage of graphene in the positive electrode mixture is 1.5% by mass or more and 7% by mass or less. The percentage of the graphene in carbon materials contained in the positive electrode mixture is 70% by mass or more. When the content percentages of the components in the positive electrode mixture are adjusted as described above, a capacity drop and an increase in the internal resistance of the positive electrode during high-temperature storage can be suppressed, although the reason is not clear. Thus, when the positive electrode mixture is included in the positive electrode of an all-solid-state battery, the all-solid-state battery can be provided with excellent high-temperature storage characteristics.

The content percentage of a positive electrode active material in the positive electrode mixture is preferably 50% by mass or more, and more preferably 52% by mass or more, and also is preferably 78% by mass or less, more preferably 70% by mass or less, further preferably 65% by mass or less, and most preferably 60% by mass or less. The content percentage of a solid electrolyte in the positive electrode mixture is preferably 30% by mass or more, and more preferably 35% by mass or more, and also is preferably 45% by mass or less. The content percentage of graphene in the positive electrode mixture is preferably 2% by mass or more, and also is preferably 5% by mass or less.

If the positive electrode mixture contains other carbon materials than graphene as its conductive assistants, the percentage of the other carbon materials in all the carbon materials is preferably 30% by mass or less, and more preferably 15% by mass or less to prevent the characteristic deterioration during high-temperature storage.

If the positive electrode includes a current collector, the current collector may be: a foil, a punched metal, a net, an expanded metal, or a metal foam made of metal such as aluminum or stainless steel; or a carbon sheet.

The molded body of the positive electrode mixture can be formed by, e.g., mixing a positive electrode active material (such as the above-described positive electrode active material that has the surface layers), a solid electrolyte, and graphene, and optionally, e.g., a binder and other conductive assistants than the graphene that are added as necessary, to prepare a positive electrode mixture, and compressing the positive electrode mixture by, e.g., pressure molding.

If a current collector is added to the positive electrode, the positive electrode can be produced by sticking the molded body of the positive electrode mixture that has been formed using such a method as described above, to the current collector by, e.g., pressure joining. Alternatively, the molded body of the positive electrode mixture and the current collector of the positive electrode may not be integrated with each other, and thus may be independent from each other in a battery.

More preferably, the positive electrode is produced in a step in a method for producing an all-solid-state battery. The method will be described below. This way of production allows the porosity of the molded body of the positive electrode mixture to be adjusted to a smaller value, and also allows the porosity of the solid electrolyte layer and the porosity of the molded body of the negative electrode mixture to be adjusted to smaller values.

Although the thickness of the molded body of the positive electrode mixture is ordinarily 50 $\mu$m or more, the thickness is preferably 200 $\mu$m or more in view of the increase in the capacity of the battery. The thickness of the molded body of the positive electrode mixture is ordinarily 3000 $\mu$m or less. The thickness is more preferably 500 $\mu$m or less in view of the further improvement in the load characteristics of the battery.

<All-solid-state battery>

An all-solid-state battery of the present invention includes an electrode body in which a positive electrode, a solid electrolyte layer, and a negative electrode are stacked. The positive electrode is a positive electrode of the present invention for an all-solid-state battery.

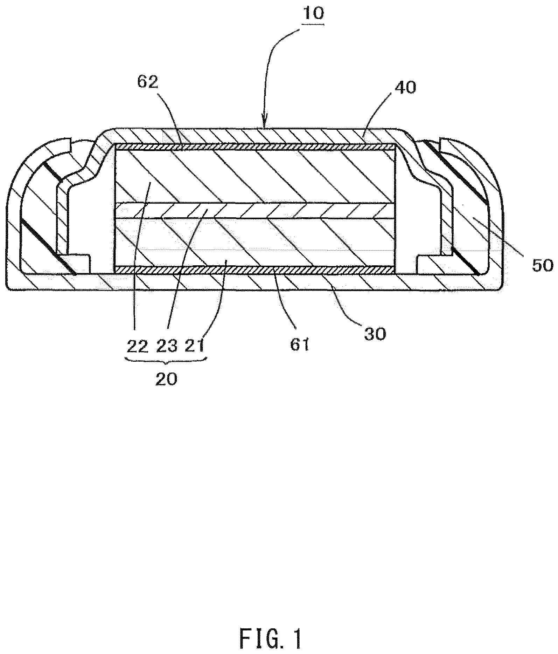

FIG. 1 is a cross-sectional view schematically illustrating an exemplary all-solid-state battery of the present invention. An all-solid-state battery 10 illustrated in FIG. 1 includes an exterior body and an electrode body 20 sealed in the exterior body. The exterior body includes an exterior can 30, a sealing can 40, and a gasket 50 that is interposed therebetween and is made of resin. In the electrode body 20, a positive electrode (positive electrode of the present invention for an all-solid-state battery) 21, a solid electrolyte layer 23, and a negative electrode 22 are stacked.

The sealing can 40 fits in the opening of the exterior can 30 with the gasket 50 interposed therebetween. The opening edge of the exterior can 30 is tightened inward, so that the gasket 50 is in contact with the sealing can 40 and thus seals the opening of the exterior can 30 to form a tightly closed structure in the element.

A current collector 61 is between the positive electrode 21 and the exterior can 30. The inner face of the exterior can 30 is electrically connected with the positive electrode 21 through the current collector 61, so that the exterior can 30 functions as the positive electrode terminal. A current collector 62 is between the negative electrode 22 and the sealing can 40. The inner face of the sealing can 40 is electrically connected with the negative electrode 22 through the current collector 62, so that the sealing can 40 functions as the negative electrode terminal. The exterior can may function as the negative electrode terminal and the sealing can may function as the positive electrode terminal, depending on, e.g., the intended use of the battery. The positive electrode may be directly in contact with the inner face of the exterior can or the inner face of the sealing can without a current collector therebetween. The negative electrode may be directly in contact with the inner face of the exterior can or the inner face of the sealing can without a current collector therebetween.

(Negative electrode)

The negative electrode of the all-solid-state battery may include a molded body of a negative electrode mixture that contains a negative electrode active material.

If the negative electrode includes a molded body of a negative electrode mixture that contains a negative electrode active material, the negative electrode may be the molded body of the negative electrode mixture (e.g., a pellet), or may include a current collector and a layer of the molded body of the negative electrode mixture (negative electrode mixture layer) that is formed on the current collector.

If the negative electrode includes a molded body of a negative electrode mixture, examples of its negative electrode active material include lithium-containing complex oxides such as lithium titanate, carbon materials such as graphite, simple substances, compounds (e.g., oxides), and alloys that include elements such as Si and Sn. Further, lithium metal and lithium alloys (such as a lithium-aluminum alloy and a lithium-indium alloy) can be used as the negative electrode active material.

The content of a negative electrode active material in the negative electrode mixture is preferably 10 to 99% by mass.

The negative electrode mixture may contain a conductive assistant. Specific examples of the conductive assistant include the above-exemplified conductive assistants that the positive electrode mixture can contain. The content of the conductive assistant in the negative electrode mixture is preferably 1 to 10% by mass.

The negative electrode mixture may contain a binder. Specific examples of the binder include the above-exemplified binders that the positive electrode mixture can contain. If good moldability can be secured for forming the molded body of the negative electrode mixture without using a binder, as in the case where the negative electrode mixture contains a sulfide-based solid electrolyte (the case will be described below), the negative electrode mixture may contain no binder.

When the negative electrode mixture contains a binder, the content of the binder is preferably 15% by mass or less, and also is preferably 0.5% by mass or more. When moldability is obtained without a binder, the content of a binder in the negative electrode mixture is preferably 0.5% by mass or less, more preferably 0.3% by mass or less, and further preferably 0% by mass (that is, the negative electrode mixture contains no binder).

The negative electrode mixture contains a solid electrolyte. Specific examples of the solid electrolyte include the above-exemplified solid electrolytes that the positive electrode mixture can contain. Among the above-exemplified solid electrolytes, sulfide-based solid electrolytes are much preferable because they have a high lithium ion conductivity and have a function of improving the moldability of the negative electrode mixture.

The content of the solid electrolyte in the negative electrode mixture is preferably 4 to 49% by mass.

If a current collector is added to the negative electrode that includes the molded body of the negative electrode mixture, the current collector may be: a foil, a punched metal, a net, an expanded metal, or a metal foam made of copper or nickel; or a carbon sheet.

The molded body of the negative electrode mixture can be formed by, e.g., mixing a negative electrode active material with, e.g., a conductive assistant, a solid electrolyte, and a binder which are added as necessary, to prepare a negative electrode mixture, and compressing the negative electrode mixture by, e.g., pressure molding. The negative electrode that is constituted by only the molded body of the negative electrode mixture can be produced using this method. More preferably, the negative electrode (molded body of the negative electrode mixture) is produced in a step in a method for producing an all-solid-state battery (the method will be described below) because the porosity of the molded body of the negative electrode mixture can be further decreased, and thus the internal resistance of the molded body of the negative electrode mixture can be further decreased.

If a current collector is added to the negative electrode, the negative electrode can be produced by sticking the molded body of the negative electrode mixture that has been formed, to the current collector by, e.g., pressure joining. Alternatively, the molded body of the negative electrode mixture and the current collector of the negative electrode may not be integrated with each other, and thus may be independent from each other in a battery.

Although the thickness of the molded body of the negative electrode mixture is ordinarily 50 $\mu$m or more, the thickness is preferably 200 $\mu$m or more in view of the increase in the capacity of the battery. The thickness of the molded body of the negative electrode mixture is ordinarily 3000 $\mu$m or less. The thickness is preferably 500 $\mu$m or less in view of the further improvement in the load characteristics of the battery.

(Solid electrolyte layer)

The solid electrolyte layer between the positive electrode and the negative electrode can include one or two or more solid electrolytes selected from the group consisting of the above-exemplified various sulfide-based solid electrolytes, hydride-based solid electrolytes, halide-based solid electrolytes, and oxide-based solid electrolytes that can be included in the positive electrode. The solid electrolyte layer between the positive electrode and the negative electrode desirably contains a sulfide-based solid electrolyte, and more desirably contains an argyrodite-type sulfide-based solid electrolyte to obtain more excellent battery characteristics. Further desirably, the positive electrode, the negative electrode, and the solid electrolyte layer each contain a sulfide-based solid electrolyte. Particularly desirably, the positive electrode, the negative electrode, and the solid electrolyte layer each contain an argyrodite-type sulfide-based solid electrolyte.

The solid electrolyte layer may include a porous body as a support. The porous body may be a non-woven fabric made of resin.

The solid electrolyte layer may be formed using a method for compressing a solid electrolyte by, e.g., pressure molding. More preferably, the solid electrolyte layer is produced in a step in a method for producing an all-solid-state battery (the method will be described below) because the porosity of the solid electrolyte layer can be further decreased, and thus the ion conductivity can be further improved.

The thickness of the solid electrolyte layer is preferably 10 to 400 μm.

<Method for producing all-solid-state battery>

An all-solid-state battery can be produced using, for example, the following method.

A method for producing an all-solid-state battery includes preparation of a positive electrode mixture. The preparation includes dividing a solid electrolyte to be included in a positive electrode mixture into two parts, mixing one part of the solid electrolyte with a positive electrode active material, and mixing the mixture with the other part of the solid electrolyte and graphene. The prepared positive electrode mixture is molded under a certain surface pressure or more. In other words, a step to form a positive electrode includes (a) a step to mix a positive electrode active material with part of a solid electrolyte to be included in a positive electrode mixture to form a first composition (first mixing step), (b) a step to mix the first composition, the remaining solid electrolyte that has not been used for the formation of the first composition, and carbon materials that include graphene to prepare a positive electrode mixture (second mixing step), and (c) a step to mold the positive electrode mixture under pressure to form a molded body of the positive electrode mixture (pressurization step).

A solid electrolyte to be added in the second mixing step may be the same as or different from a solid electrolyte used in the first mixing step.

Because the positive electrode active material is mixed with the solid electrolyte before being mixed with graphene, the fillability of the positive electrode mixture in the pressurization step can be improved. Further, the joining of the positive electrode active material and the solid electrolyte becomes better, and thus the internal resistance can be decreased.

(a) In the first mixing step, a method for forming the first composition is not limited. For example, the method includes kneading the positive electrode active material and the solid electrolyte with a kneader that includes grinding media (such as a planetary ball mill), a planetary centrifugal kneader, or a dry kneader (such as a "NOB-MINI" (product name) manufactured by HOSOKAWA MICRON CORPORATION).

(b) In the second mixing step, it is sufficient if the first composition, the remaining solid electrolyte that has not been used for the formation of the first composition, the graphene, etc. are mixed using an established method to prepare a positive electrode mixture. The second mixing step adjusts the content percentage of the solid electrolyte to 17% by mass or more and 46% by mass or less, and the content percentage of the graphene to 1.5% by mass or more and 7% by mass or less, and the percentage of the graphene in the carbon materials to 70% by mass or more, as described above.

(c) The pressurization step molds the positive electrode mixture under a surface pressure of 1000 MPa or more. The upper limit of the surface pressure under which the positive electrode mixture is molded is ordinarily approximately 2000 MPa.

In the production of the positive electrode, the pressurization step may be one step that molds a positive electrode mixture under a surface pressure of 1000 MPa or more from the beginning of the step. To improve the fillability of the positive electrode mixture, the pressurization step preferably includes a step to mold a positive electrode mixture under a surface pressure of 500 MPa or less to form a preliminarily molded body of the positive electrode mixture (first pressurization step), and a second pressurization step to mold the preliminarily molded body of the positive electrode mixture under a surface pressure of 1000 MPa or more. Consequently, occurrence of cracking and the like can be suppressed while it is possible to form a molded body of a positive electrode mixture having a smaller porosity, and improve the contactability between the positive electrode and the solid electrolyte layer of an electrode body in which the positive electrode, the solid electrolyte layer, and the negative electrode are stacked.

The surface pressure for the pressure molding in the formation of the preliminarily molded body of the positive electrode mixture (first pressurization step) is more preferably 450 MPa or less, further preferably 400 MPa or less, and also is preferably 30 MPa or more, more preferably 100 MPa or more, and further preferably 150 MPa or more to favorably maintain the shape of the preliminarily molded body.

Preferably, the preliminarily molded body of the positive electrode mixture is formed on one side of a preliminarily molded body of a solid electrolyte by filling a positive electrode mixture onto the preliminarily molded body of the solid electrolyte. The preliminarily molded body of the solid electrolyte is formed using the following method.

The preliminarily molded body of the solid electrolyte is for formation of a solid electrolyte layer. The preliminarily molded body of the solid electrolyte is formed by molding a solid electrolyte under a lower surface pressure. Then, the preliminarily molded body of the solid electrolyte, which has been formed, is pressurized under a higher surface pressure to form a solid electrolyte layer. Thus, occurrence of cracking can be suppressed while it is possible to form a solid electrolyte layer having a smaller porosity and a higher ion conductivity, and improve the contactability between the solid electrolyte layer and the positive electrode or the negative electrode. The surface pressure for the pressure molding to form the preliminarily molded body of the solid electrolyte is varied slightly according to the type of the solid electrolyte, but is, e.g., preferably 120 MPa or less, more preferably 100 MPa or less, and further preferably 90 MPa or less, and also is preferably 30 MPa or more, more preferably 40 MPa or more, and further preferably 50 MPa or more to favorably maintain the shape of the preliminarily molded body.

In a method for preparing the positive electrode mixture, a positive electrode active material, graphene, and a solid electrolyte may be simultaneously mixed. In this case, the step to mold the positive electrode mixture under pressure can be performed under conditions similar to the above-described conditions.

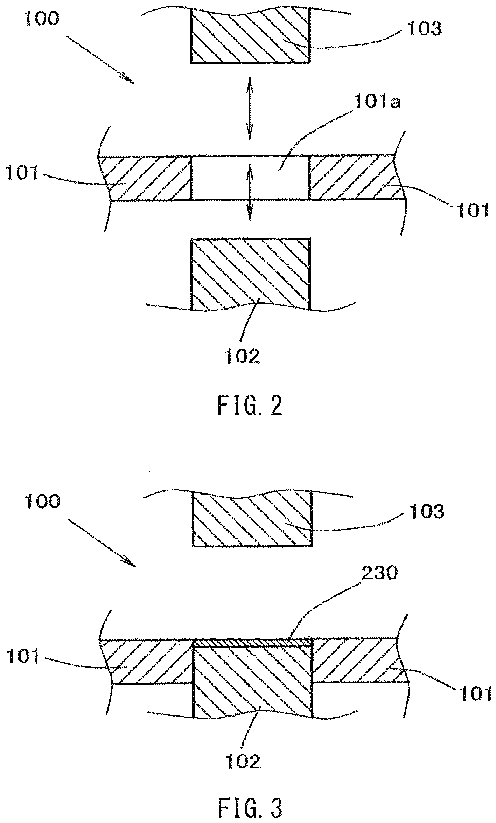

Hereinafter, an exemplary procedure for producing a molded body in which a positive electrode, a solid electrolyte layer, and a negative electrode are stacked will be described with reference to FIGS. 2 to 9.

(i) Firstly, a pressurization device 100 as illustrated in FIG. 2 is prepared. The pressurization device 100 includes a die 101, a lower mallet 102, and an upper mallet 103. The die 101 has a mortar hole 101a that extends vertically through the die 101. The lower mallet 102 is inserted upward into the mortar hole 101a and slides in the mortar hole 10 1a. The upper mallet 103 is inserted downward into the mortar hole 10 1a and slides in the mortar hole 101a. The die 101 has a board-like shape. The mortar hole 101a is a cylindrical opening that extends through the die 101 from the upper surface to the lower surface of the die 101. The lower mallet 102 and the upper mallet 103 each have a columnar shape that corresponds to the shape of the opening of the mortar mallet. The pressurization device 100 slides the lower mallet 102 and the upper mallet 103 vertically back and forth in FIG. 2 with a machine press to pressurize a material that has been filled into the mortar hole 101a. The pressurization device 100 may be a powder-molding mold. Alternatively, the pressurization device 100 may be a tablet-molding machine because it is sufficient if the pressurization device 100 can pressurize the material under a predetermined surface pressure to form the molded body.

(ii) Next, as illustrated in FIG. 3, the lower mallet 102 is inserted into the mortar hole to close the lower opening of the mortar hole with the lower mallet 102. In this state, a solid electrolyte 230 is filled downward into the mortar hole. The solid electrolyte 230 is filled into the mortar hole from a hopper (not shown). The hopper can move over the upper surface of the die 101 in parallel to the upper surface. Hereinafter, the same applies to a negative electrode mixture 220 and a positive electrode mixture 210 to be filled into the mortar hole. The hopper moves to a position over the mortar hole to fill the solid electrolyte 230. When the hopper does not fill the solid electrolyte 230, the hopper stays at a position apart from over the mortar hole.

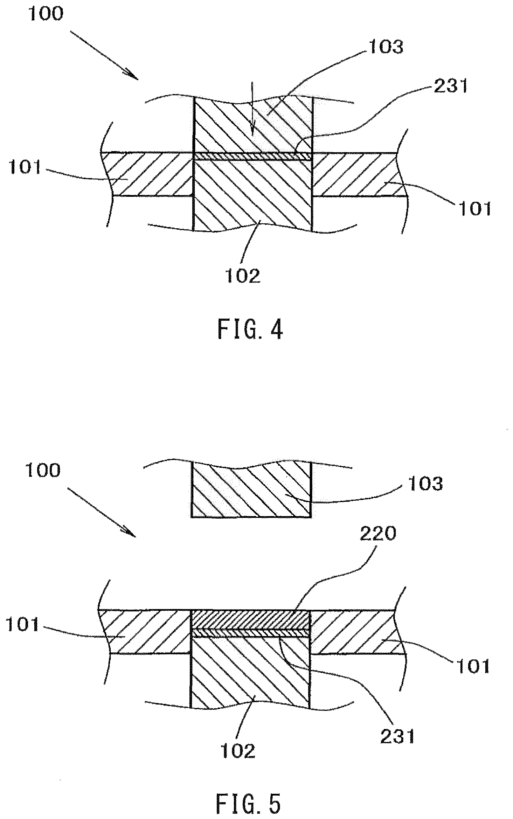

(iii) Next, as illustrated in FIG. 4, the upper mallet 103 pressurizes downward the solid electrolyte 230 under a surface pressure of, e.g., 120 MPa or less (a preliminary press) to form a preliminarily molded body 231 for obtaining a solid electrolyte layer 23.

(iv) Next, as illustrated in FIG. 5, the lower mallet 102 on which the preliminarily molded body 231 of the solid electrolyte is placed is moved downward, and the upper mallet 103 is moved upward. In this state, a negative electrode mixture 220 is filled into the mortar hole to place the negative electrode mixture 220 on one main surface of the preliminarily molded body 231 of the solid electrolyte, that is, the upper surface of the preliminarily molded body 231 in FIG 5.

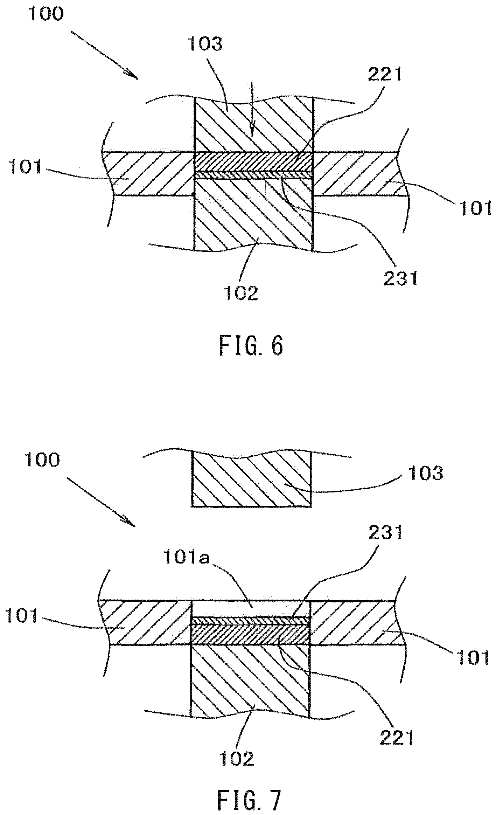

(v) Next, as illustrated in FIG. 6, the upper mallet 103 pressurizes downward the negative electrode mixture 220 placed on the upper surface of the preliminarily molded body 231 of the solid electrolyte (a preliminary press) to form a preliminarily molded body 221 for obtaining a molded body of the negative electrode mixture.

Because the negative electrode mixture is pressurized under a lower surface pressure to form the preliminarily molded body of the negative electrode mixture, and then the preliminarily molded body of the negative electrode mixture is pressurized under a higher surface pressure to form a molded body of the negative electrode mixture, occurrence of cracking can be suppressed while it is possible to form the molded body of the negative electrode mixture having a smaller porosity, and improve the contactability between the molded body of the negative electrode mixture and the solid electrolyte layer. The surface pressure for the pressure molding to form the preliminarily molded body of the negative electrode mixture is preferably 500 MPa or less, more preferably 450 MPa or less, further preferably 400 MPa or less, and also is preferably 30 MPa or more, more preferably 100 MPa or more, and further preferably 150 MPa or more to favorably maintain the shape of the preliminarily molded body.

(vi) Next, as illustrated in FIG. 7, the preliminarily molded body 221 of the negative electrode mixture and the preliminarily molded body 231 of the solid electrolyte are turned upside down. In other words, they are turned upside down, so that the preliminarily molded body 231 of the solid electrolyte is located over the preliminarily molded body 221 of the negative electrode mixture in FIG. 7. In this case, the preliminarily molded body 221 of the negative electrode mixture and the preliminarily molded body 231 of the solid electrolyte may be taken out from the pressurization device 100, turned upside down, and placed in the mortar hole 101a of the pressurization device 100 again. Alternatively, the pressurization device 100 that is holding the preliminarily molded body 221 of the negative electrode mixture and the preliminarily molded body 231 of the solid electrolyte may be turned upside down, so that the preliminarily molded body 221 of the negative electrode mixture and the preliminarily molded body 231 of the solid electrolyte are turned upside down. At this time, the lower mallet 102 on which the preliminarily molded body 221 of the negative electrode mixture and the preliminarily molded body 231 of the solid electrolyte are placed is moved downward, and the upper mallet 103 is moved upward to form a space for filling a molded body of a positive electrode mixture into the mortar hole 101a.

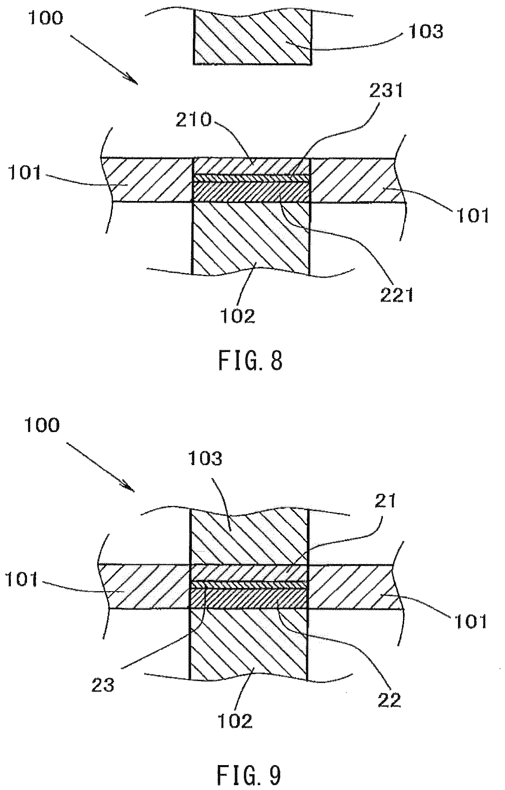

Next, as illustrated in FIG. 8, a positive electrode mixture 210 is filled into the mortar hole to place the positive electrode mixture 210 on the other main surface of the preliminarily molded body 231 of the solid electrolyte (the upper surface in FIG. 8).

Next, as illustrated in FIG. 9, the upper mallet 103 pressurizes downward the positive electrode mixture 210, the preliminarily molded body 231 of the solid electrolyte, and the preliminarily molded body 221 of the negative electrode mixture under a surface pressure of 1000 MPa or more (a main press). Consequently, the positive electrode mixture, the preliminarily molded body of the solid electrolyte, and the preliminarily molded body of the negative electrode mixture are compressed to form a molded body (electrode body) in which a molded body 21 of the positive electrode mixture, a solid electrolyte layer 23, and a molded body 22 of the negative electrode mixture are stacked. More preferably, before the main press, the positive electrode mixture placed on the upper surface of the preliminarily molded body of the solid electrolyte is pressurized under a lower surface pressure (e.g., 500 MPa or less, as described above) to form a preliminarily molded body of the positive electrode mixture, and then the preliminarily molded body of the positive electrode mixture, the preliminarily molded body of the solid electrolyte, and the preliminarily molded body of the negative electrode mixture are pressurized (a main press) to form the molded body.

The molded body produced as described above, in which the positive electrode, the solid electrolyte layer, and the negative electrode are stacked, is put in an exterior body to obtain an all-solid-state battery.

The exterior body of the all-solid-state battery is, e.g., such a battery container as illustrated in FIG. 1 that includes an exterior can and a sealing can. That is, the all-solid-state battery that includes such a battery container as its exterior body is a coin-shaped (button-shaped) battery.

If the exterior body of the all-solid-state battery is the battery container that includes the exterior can and the sealing can, the opening may be sealed by crimping the exterior can and the sealing can with a gasket interposed therebetween as illustrated in FIG. 1. Alternatively, the exterior can and the sealing can may be stuck to each other with resin.

The exterior can and the sealing can may be made of, e.g., stainless steel. The gasket may be made of, e.g., polypropylene or nylon. Moreover, when heat resistance is required in relation to the intended use of the battery, the gasket may be made of heat-resistant resin with a melting point of more than 240°C such as: a fluorocarbon resin, e.g., a tetrafluoroethylene-perfluoroalkoxyethylene copolymer (PFA); polyphenylene ether (PEE); polysulfone (PSF); polyarylate (PAR); polyether sulfone (PES); polyphenylene sulfide (PPS); and polyether ether ketone (PEEK). Further, when the intended use of the battery requires heat resistance, the opening may be sealed by a glass hermetic seal.

The shape of the exterior body constituted by the battery container that includes the exterior can and the sealing can may be circular or polygonal, e.g., quadrangular (square or rectangular) in a plan view. In the case of the polygonal shape, the corners may be curved.

The exterior body of the all-solid-state battery may be an exterior body that includes a hollow container that is made of, e.g., ceramic and is able to contain the electrode body, and a lid that is made of, e.g., metal and can cover the opening of the hollow container. If the container is an insulator, the container may include conductive paths that extend from the inside to the outside of the container to conductively connect the electrode body with external terminals.

The exterior body of the all-solid-state battery may be a laminating film exterior body constituted by a metal laminating film such as an aluminum laminating film.

Examples

Hereinafter, the present invention is described in detail by way of the Examples. However, it should be noted that the Examples given below are not intended to limit the scope of the present invention.

Example 1

<Preparation of positive electrode mixture>

85 parts by mass of a positive electrode active material and 15 parts by mass of a sulfide-based solid electrolyte ($Li_{5.8}PS_{4.4}Cl_{1.2}$) were mixed with a mixer to obtain a first composition. The positive electrode active material had an average particle size of 5 um. The positive electrode active material had core portions composed of $LiCo_{0.98}Al_{0.01}Mg_{0.01}O_2$, and surface layers that each covered the surface of corresponding one of the core portions and were made of LiNbOs. The sulfide-based solid electrolyte had an average particle size of 0.7 $\mu$m.

73 parts by mass of the first composition obtained as described above, 23 parts by mass of the above-described sulfide-based solid electrolyte having an average particle size of 0.7 $\mu$m, and 4 parts by mass of graphene (a conductive assistant) were mixed to prepare a positive electrode mixture. The graphene had an average particle size of 8 $\mu$m, a thickness of 10 to 20 nm, and a BET specific surface area of 24 $m^2$/g. The mass ratio of the positive electrode active material ($LiCo_{0.98}Al_{0.01}Mg_{0.01}O_2$ covered by the surface layers made of LiNbOs), the solid electrolyte, and the graphene in the positive electrode mixture was 62:34:4. The ratio B/A, where B was the average particle size of the graphene, and A was the average particle size of the positive electrode active material, was 1.6.

<Preparation of negative electrode mixture>

50 parts by mass of lithium titanate ($Li_4Ti_5O_{12}$, a negative electrode active material) that had an average particle size of 2 $\mu$m, 41 parts by mass of the sulfide-based solid electrolyte that was used for the positive electrode mixture and had an average particle size of 0.7 $\mu$m, and 9 parts by mass of the graphene (conductive assistant) that was used for the positive electrode mixture were mixed to prepare a negative electrode mixture.

Production of molded body in which positive electrode, solid electrolyte layer, and negative electrode are stacked>

Powder of the sulfide-based solid electrolyte that was used for the positive electrode mixture and had an average particle size of 0.7 $\mu$m was put in a powder-molding mold, and molded under a surface pressure of 70 MPa (0.7 tf/$cm^2$) with a machine press to form a preliminarily molded body of the solid electrolyte. The above-described negative electrode mixture was placed on the upper surface of the preliminarily molded body of the solid electrolyte, and molded under a surface pressure of 300 MPa (3 tf/$cm^2$) to form a preliminarily molded body of the negative electrode mixture on the preliminarily molded body of the solid electrolyte.

The mold was turned upside down. Then, the above-described positive electrode mixture was placed on the upper surface of the preliminarily molded body of the solid electrolyte in the mold. The upper surface of the preliminarily molded body of the solid electrolyte was on the opposite side of the surface of the preliminarily molded body of the solid electrolyte on which the preliminarily molded body of the negative electrode mixture was. The positive electrode mixture was molded under a surface pressure of 300 MPa (3 tf/$cm^2$) to form a preliminarily molded body of the positive electrode mixture. Next, all the preliminarily molded bodies were molded under a surface pressure of 1400 MPa (14 tf/$cm^2$) to obtain a molded body (electrode body) in which the positive electrode (the molded body of the positive electrode mixture), the solid electrolyte layer, and the negative electrode (the molded body of the negative electrode mixture) were stacked. The volume of each component material of the obtained molded body was determined from the specific gravity of the component material and the mass of the component material in the molded body. The total volume V1 of the component materials was determined. The apparent volume V2 of the molded body was determined based on the thickness and area of the molded body. The average porosity of the entire molded body, which was determined using the following formula from the total volume V1 and the apparent volume V2, was 4.5%.

$$\text{Average porosity (\%) of entire molded body} = (V2 - V1)/V2 \times 100$$

<Assembly of battery>

A flexible graphite sheet "PERMA-FOIL (product name)" manufactured by Toyo Tanso Co., Ltd. and having a thickness of 0.1 mm and an apparent density of 1.1 g/$cm^3$ was die-cut into two pieces that had the same size as the above-described molded body. A first piece of the graphite sheet was placed on the inner bottom of a stainless-steel sealing can around which a polyphenylene sulfide annular gasket was fitted. The molded body was placed on the first piece of the graphite sheet so that a surface of the molded body that exposed the negative electrode was in contact with the graphite sheet. The remaining piece of the graphite sheet was placed on a surface of the molded body that exposed the positive electrode. The sealing can was covered with a stainless-steel exterior can. Then, the opening edge of the exterior can was crimped inward to seal the opening. Consequently, an all-solid-state secondary battery (coin-shaped all-solid-state secondary battery) that had the structure illustrated in FIG. 3 was produced.

Example 2

A positive electrode mixture was prepared similarly as in Example 1 except changing the mix ratio of the first composition, the sulfide-based solid electrolyte, and the graphene to 65:31:4 parts by mass, and the mass ratio of the positive electrode active material ($LiCo_{0.98}Al_{0.01}Mg_{0.01}O_2$ covered by the surface layers of LiNbOs), the solid electrolyte, and the graphene to 55:41:4. An all-solid-state secondary battery was produced similarly as in Example 1 except using this positive electrode mixture.

Example 3

A positive electrode mixture was prepared similarly as in Example 1 except changing the mix ratio of the first composition, the sulfide-based solid electrolyte, and the graphene to 76.5:19.5:4 parts by mass, and the mass ratio of the positive electrode active material ($LiCo_{0.98}Al_{0.01}Mg_{0.01}O_2$ covered by the surface layers of $LiNbOs$), the solid electrolyte, and the graphene to 65:31:4. An all-solid-state secondary battery was produced similarly as in Example 1 except using this positive electrode mixture.

Example 4

A positive electrode mixture was prepared similarly as in Example 1 except changing the mix ratio of the first composition, the sulfide-based solid electrolyte, and the graphene to 88:9:3 parts by mass, and the mass ratio of the positive electrode active material ($LiCo_{0.98}Al_{0.01}Mg_{0.01}O_2$ covered by the surface layers of $LiNbOs$), the solid electrolyte, and the graphene to 75:22:3. An all-solid-state secondary battery was produced similarly as in Example 1 except using this positive electrode mixture.

Example 5

A positive electrode mixture was prepared similarly as in Example 1 except changing the mix ratio of the first composition, the sulfide-based solid electrolyte, and the graphene to 73:21:6 parts by mass, and the mass ratio of the positive electrode active material ($LiCo_{0.98}Al_{0.01}Mg_{0.01}O_2$ covered by the surface layers of $LiNbOs$), the solid electrolyte, and the graphene to 62:32:6. An all-solid-state secondary battery was produced similarly as in Example 1 except using this positive electrode mixture.

Example 6

A positive electrode mixture was prepared similarly as in Example 1 except simply mixing 62 parts by mass of the positive electrode active material ($LiCo_{0.98}Al_{0.01}Mg_{0.01}O_2$ covered by the surface layers of $LiNbOs$), 34 parts by mass of the sulfide-based solid electrolyte, and 4 parts by mass of the graphene without producing the first composition. An all-solid-state secondary battery was produced similarly as in Example 1 except using this positive electrode mixture.

Example 7

A positive electrode mixture was prepared similarly as in Example 1 except using 3 parts by mass of the graphene and 1 part by mass of acetylene black as conductive assistants to be mixed with the first composition instead of 4 parts by mass of the graphene (the percentage of the graphene in the carbon materials was 75% by mass), and thus the mass ratio of the positive electrode active material ($LiCo_{0.98}Al_{0.01}Mg_{0.01}O_2$ covered by the surface layers of $LiNbOs$), the solid electrolyte, the graphene, and the acetylene black being 62:34:3:1. An all-solid-state secondary battery was produced similarly as in Example 1 except using this positive electrode mixture.

Example 8

A positive electrode mixture was prepared similarly as in Example 1 except using a positive electrode active material having an average particle size of 12 $\mu$m. An all-solid-state secondary battery was produced similarly as in Example 1 except using this positive electrode mixture. The ratio B/A, where B was the average particle size of the graphene, and A was the average particle size of the positive electrode active material, was 0.67.

Example 9

A positive electrode mixture was prepared similarly as in Example 1 except using graphene having an average particle size of 22 $\mu$m, a thickness of 10 to 20 nm, and a BET specific surface area of $20m^2/g$. An all-solid-state secondary battery was produced similarly as in Example 1 except using this positive electrode mixture. The ratio B/A, where B was the average particle size of the graphene, and A was the average particle size of the positive electrode active material, was 4.4.

Example 10

Preparation of a positive electrode mixture, preparation of a negative electrode mixture, and formation of a preliminarily molded body of a solid electrolyte were performed similarly as in Example 1 except using $Li_{5.8}PS_{4.4}Cl_{0.6}Br_{0.6}$ as a sulfide-based solid electrolyte instead of $Li_{5.8}PS_{4.4}Cl_{1.2}$. An all-solid-state secondary battery was produced similarly as in Example 1 except this difference.

Comparative Example 1

A positive electrode mixture was prepared similarly as in Example 1 except using carbon nanotubes ("VGCF' (product name) manufactured by Showa Denko K.K.) instead of the graphene. An all-solid-state secondary battery was produced similarly as in Example 1 except using this positive electrode mixture.

Comparative Example 2

A positive electrode mixture was prepared similarly as in Example 1 except using 2 parts by mass of carbon nanotubes ("VGCF' (product name) manufactured by Showa Denko K.K.) and 2 parts by mass of acetylene black as conductive assistants to be mixed with the first composition instead of 4 parts by mass of the graphene, and thus the mass ratio of the positive electrode active material ($LiCo_{0.98}Al_{0.01}Mg_{0.01}O_2$ covered by the surface layers of LiNbOs), the solid electrolyte, the carbon nanotubes, and the acetylene black being 62:34:2:2. An all-solid-state secondary battery was produced similarly as in Example 1 except using this positive electrode mixture.

Comparative Example 3

A positive electrode mixture was prepared similarly as in Example 1 except using acetylene black instead of the graphene. An all-solid-state secondary battery was produced similarly as in Example 1 except using this positive electrode mixture.

Comparative Example 4

A positive electrode mixture was prepared similarly as in Example 1 except using 2 parts by mass of the graphene and 2 parts by mass of acetylene black as conductive assistants to be mixed with the first composition instead of 4 parts by mass of the graphene (the percentage of the graphene in the carbon materials was 50% by mass), and thus the mass ratio of the positive electrode active material ($LiCo_{0.98}Al_{0.01}Mg_{0.01}O_2$ covered by the surface layers of LiNbOs), the solid electrolyte, the graphene, and the acetylene black being 62:34:2:2. An all-solid-state secondary battery was produced similarly as in Example 1 except using this positive electrode mixture.

Comparative Example 5

A positive electrode mixture was prepared similarly as in Example 1 except changing the mix ratio of the first composition, the sulfide-based solid electrolyte, and the graphene to 76.5:5.5:18 parts by mass, and the mass ratio of the positive electrode active material ($LiCo_{0.98}Al_{0.01}Mg_{0.01}O_2$ covered by the surface layers of LiNbOs), the solid electrolyte, and the graphene to 65:17:18. Although the production of a molded body in which a positive electrode, a solid electrolyte layer, and a negative electrode are stacked was tried, the positive electrode (molded body of the positive electrode mixture) was not favorably molded, and thus the production of an all-solid-state secondary battery was not performed.

Comparative Example 6

A positive electrode mixture was prepared similarly as in Example 1 except changing the mix ratio of the first composition, the sulfide-based solid electrolyte, and the graphene to 76.5:22.5:1 part by mass, and the mass ratio of the positive electrode active material ($LiCo_{0.98}Al_{0.01}Mg_{0.01}O_2$ covered by the surface layers of LiNbOs), the solid electrolyte, and the graphene to 65:34:1. An all-solid-state secondary battery was produced similarly as in Example 1 except using this positive electrode mixture.

Comparative Example 7

A positive electrode mixture was prepared similarly as in Example 1 except changing the mix ratio of the positive electrode active material and the sulfide-based solid electrolyte in the first composition to 85:8 parts by mass, the mix ratio of the first composition, the sulfide-based solid electrolyte, and the graphene to 93:5:2 parts by mass, and the mass ratio of the positive electrode active material ($LiCo_{0.98}Al_{0.01}Mg_{0.01}O_2$ covered by the surface layers of $LiNbO_s$), the solid electrolyte, and the graphene to 85:13:2. An all-solid-state secondary battery was produced similarly as in Example 1 except using this positive electrode mixture.

The all-solid-state secondary batteries of the Examples and the Comparative Examples were subjected to the following evaluations.

[Internal resistance evaluation]

Ten all-solid-state secondary batteries of each of the Examples and Comparative Examples were each charged by constant-current and constant-voltage charging in which constant-current charging that was performed at a current value of 0.5 C until the battery voltage reached 2.6 V was combined with constant-voltage charging that was performed at a voltage of 2.6 V until the current value reached 0.01 C. Further, each battery was discharged by constant-current discharge at a current value of 0.05 C until the battery voltage reached 1.0 V to measure the discharge capacity (initial capacity) of the battery. The average of the discharge capacities (initial capacities) of the ten batteries was determined. Then, an alternating current of 1 kHz was applied to each battery to measure the internal resistance (initial internal resistance) of the battery. The average of the internal resistances (initial internal resistances) of the ten batteries was determined. Because the batteries of the Examples and Comparative Examples each included substantially the same negative electrode and solid electrolyte layer, the difference in the internal resistance between the batteries is considered to reflect the difference in the internal resistance between the positive electrodes. Thus, the internal resistance of the positive electrode can be evaluated from the internal resistance of the battery determined by this measurement.

[High-temperature storage characteristic evaluation]

After the internal resistance evaluation, the ten all-solid-state secondary batteries of each of the Examples and Comparative Examples were charged by the constant-current and constant-voltage charging under the same conditions as those in the initial capacity measurement. The charged batteries were stored at 85°C for 72 hours. Then, after the temperatures of the batteries returned to a room temperature, the batteries were discharged by the constant-current discharge under the same conditions as those in the initial capacity measurement. After the discharge, each battery was charged by the constant-current and constant-voltage charging and discharged by the constant-current discharge under the same conditions as those in the initial capacity measurement to measure the discharge capacity (capacity after storage). The average of the discharge capacities (capacities after storage) of the ten batteries was determined. Then, an alternating current of 1 kHz was applied to each battery to measure the internal resistance (internal resistance after storage) of the battery. The average of the internal resistances (internal resistances after storage) of the ten batteries was determined.

For each battery, a value was obtained by dividing the capacity after storage by the initial capacity, and represented in percentage terms as a capacity retention rate. In addition, a value was obtained by subtracting the initial internal resistance from the internal resistance after storage, and the obtained value was divided by the initial internal resistance, and represented in percentage terms as a resistance deterioration rate.

Table 1 shows the configurations of the positive electrodes of the all-solid-state secondary batteries of the Examples and Comparative Examples. Table 2 shows the average porosity of the entire molded body in which the positive electrode, the solid electrolyte layer, and the negative electrode are stacked (stacked and molded body), and the results of the above evaluations of each of the all-solid-state secondary batteries of the Examples and Comparative Examples.

Because the batteries of the Examples and Comparative Examples each include substantially the same negative electrode and solid electrolyte layer, the difference in the average porosity of the entire stacked and molded body is considered to substantially reflect the difference in the porosity of the positive electrode (molded body of the positive electrode mixture). Thus, the porosity of the positive electrode can be evaluated from the average porosity of the entire stacked and molded body.

In Table 1, "AB" represents acetylene black, and "CNT" represents carbon nanotubes. In Table 1, the "production of first composition" indicates whether the first composition was produced or not to prepare the positive electrode mixture. "Y" indicates that the first composition was produced. "N" indicates that the first composition was not produced. In Table 2, the "average porosity of entire stacked and molded body" indicates the "average porosity of the entire molded body in which the positive electrode, the negative electrode, and the solid electrolyte layer were stacked". In Table 2, the initial internal resistance is a relative value with the value of Example 1 as 100. In Table 2, "-" indicates that the production of a molded body (electrode body) in which a positive electrode, a solid electrolyte layer, and a negative electrode are stacked was impossible, and thus a porosity measurement, and battery production and evaluations were not performed.

[Table 1]

| | Conductive assistant | Production of first composition | Content percentage in positive electrode mixture (% by mass) | | | |
| --- | --- | --- | --- | --- | --- | --- |
| | | | Positive electrode active material | Solid electrolyte | Conductive assistant | |
| | | | | | Graphene | Other carbon materials than graphene |
| Ex. 1 | Graphene | Y | 62 | 34 | 4 | - |
| Ex. 2 | Graphene | Y | 55 | 41 | 4 | - |
| Ex. 3 | Graphene | Y | 65 | 31 | 4 | - |
| Ex. 4 | Graphene | Y | 75 | 22 | 3 | - |
| Ex. 5 | Graphene | Y | 62 | 32 | 6 | - |
| Ex. 6 | Graphene | N | 62 | 34 | 4 | - |
| Ex. 7 | Graphene, AB | Y | 62 | 34 | 3 | 1 |
| Ex. 8 | Graphene | Y | 62 | 34 | 4 | - |
| Ex. 9 | Graphene | Y | 62 | 34 | 4 | - |
| Ex. 10 | Graphene | Y | 62 | 34 | 4 | - |
| Comp. Ex. 1 | CNT | Y | 62 | 34 | - | 4 |
| Comp. Ex. 2 | CNT, AB | Y | 62 | 34 | - | 4 |
| Comp. Ex. 3 | AB | Y | 62 | 34 | - | 4 |
| Comp. Ex. 4 | Graphene, AB | Y | 62 | 34 | 2 | 2 |
| Comp. Ex. 5 | Graphene | Y | 65 | 17 | 18 | - |
| Comp. Ex. 6 | Graphene | Y | 65 | 34 | 1 | - |
| Comp. Ex. 7 | Graphene | Y | 85 | 13 | 2 | - |
| *Example: Ex., Comparative Example: Comp. Ex. | | | | | | |

[Table 2]

| | Average porosity (%) of entire stacked and molded body | All-solid-state secondary battery | | |
| --- | --- | --- | --- | --- |
| | | Initial internal resistance | High-temperature storage characteristics | |
| | | | Capacity retention rate (%) | Resistance deterioration rate (%) |
| Ex. 1 | 4.5 | 100 | 95 | 40 |
| Ex. 2 | 4.9 | 92 | 95 | 36 |
| Ex. 3 | 4.9 | 108 | 95 | 42 |
| Ex. 4 | 5.1 | 138 | 96 | 45 |
| Ex. 5 | 5.2 | 142 | 95 | 44 |
| Ex. 6 | 7.0 | 135 | 94 | 47 |
| Ex. 7 | 5.2 | 130 | 93 | 51 |
| Ex. 8 | 5.2 | 108 | 93 | 46 |
| Ex. 9 | 4.6 | 114 | 92 | 50 |
| Ex. 10 | 4.5 | 98 | 96 | 36 |
| Comp. Ex. 1 | 7.2 | 115 | 89 | 56 |
| Comp. Ex. 2 | 6.2 | 118 | 81 | 59 |

(continued)

| | Average porosity (%) of entire stacked and molded body | All-solid-state secondary battery | | |
| --- | --- | --- | --- | --- |
| | | Initial internal resistance | High-temperature storage characteristics | |
| | | | Capacity retention rate (%) | Resistance deterioration rate (%) |
| Comp. Ex. 3 | 6.5 | 125 | 75 | 69 |
| Comp. Ex. 4 | 5.4 | 112 | 90 | 74 |
| Comp. Ex. 5 | - | - | - | - |
| Comp. Ex. 6 | 3.2 | 175 | 88 | 110 |
| Comp. Ex. 7 | 5.2 | 162 | 97 | 72 |
| *Example: Ex., Comparative Example: Comp. Ex. | | | | |

As shown in Tables 1 and 2, the all-solid-state secondary batteries of Examples 1 to 10 each had a higher capacity retention rate and a lower resistance deterioration rate after the high-temperature storage, and thus had excellent high-temperature storage characteristics. Each of the positive electrodes (molded bodies of the positive electrode mixtures) of the batteries of Examples 1 to 10 contained the graphene as a conductive assistant. Further, the percentages of the solid electrolyte and the graphene contained in each of the positive electrodes (molded bodies of the positive electrode mixtures) of the batteries of Examples 1 to 10 were appropriate. Further, the percentage of the graphene in the carbon materials as conductive assistants contained in each of the positive electrode mixtures of Examples 1 to 10 was a certain percentage or more. As a result, a capacity drop and an increase in the internal resistance of the positive electrodes during high-temperature storage were suppressed, and thus the all-solid-state batteries had excellent high-temperature storage characteristics. The preparation of the positive electrode mixture of each of Examples 1 to 5 and 7 to 10 included a step to divide the solid electrolyte to be included in the positive electrode mixture into two parts, mix one part of the solid electrolyte with the positive electrode active material, and mix the mixture with the other part of the solid electrolyte and the graphene to produce the positive electrode mixture. It is thought that because this preparation of the positive electrode mixture improved the fillability of the positive electrode mixture during pressurization, the porosity of each of the positive electrodes of Examples 1 to 5 and 7 to 10 was smaller, and thus the average porosity of the entire stacked and molded body was smaller. The initial internal resistances of the all-solid-state secondary batteries of Examples 1 to 10 were smaller than those of the batteries of Comparative Examples 6 and 7. The positive electrodes of these batteries can be evaluated as having low internal resistances.

By contrast, the molded bodies of the positive electrode mixtures of Comparative Examples 1 to 3 did not contain graphene, and thus the fillability during pressurization was inferior to that of Examples 1 to 5 and 7 to 10. Consequently, the porosities of the molded bodies of the positive electrode mixtures of the batteries of Comparative Examples 1 to 3 were higher than those of Examples 1 to 5 and 7 to 10. Further, the content percentages of the positive electrode active material, the solid electrolyte, and the graphene in each of the positive electrodes of Comparative Examples 6 and 7 were inappropriate, and thus the initial internal resistances of the batteries of Comparative Examples 6 and 7 were higher than those of the batteries of the Examples. Therefore, it can be said that the internal resistances of the positive electrodes of these batteries were higher than those of the positive electrodes of the batteries of the Examples.

The batteries of Example 7 and Comparative Example 4, each of which included the positive electrode mixture that contained the graphene and the acetylene black as conductive assistants, will be compared. The high-temperature storage characteristics of the battery of Example 7, whose percentage of the graphene in the carbon materials contained as conductive assistants was 70% by mass or more, were superior to those of Comparative Example 4.

The present invention may be embodied in other forms without departing from the essential characteristics thereof. The embodiments disclosed in the present application are to be considered in all respects as illustrative and not limitative. The scope of the invention is indicated by the appended claims rather than by the foregoing description, and all changes which come within the meaning and range of equivalency of the claims are intended to be embraced therein.

Industrial Applicability

An all-solid-state battery of the present invention is applicable to uses similar to conventional uses of primary batteries and secondary batteries, but is favorably applicable to uses in which the all-solid-state battery is exposed to high temperatures because the battery includes a solid electrolyte instead of an organic electrolyte solution, and thus has an excellent heat resistance.

Description of Reference Numerals

10 all-solid-state battery
20 electrode body in which positive electrode, solid electrolyte layer, and negative electrode are stacked
21 positive electrode
22 negative electrode
23 solid electrolyte layer
30 exterior can
40 sealing can
50 gasket
61, 62 current collector
100 pressurization device
101 die
101a mortar hole
102 lower mallet
103 upper mallet
210 positive electrode mixture
220 negative electrode mixture
221 preliminarily molded body of negative electrode mixture
230 solid electrolyte
231 preliminarily molded body of solid electrolyte

**Claims**

1. A positive electrode for an all-solid-state battery, comprising a positive electrode mixture containing a positive electrode active material, a solid electrolyte, and a carbon material,

   wherein the carbon material comprises graphene,
   a content percentage of the solid electrolyte in the positive electrode mixture is 17 to 46% by mass, and a content percentage of the graphene in the positive electrode mixture is 1.5 to 7% by mass, and
   a percentage of the graphene in the carbon material is 70% by mass or more.

2. The positive electrode for an all-solid-state battery according to claim 1, wherein the positive electrode active material has an average particle size of 3 to 10 $\mu$m.

3. The positive electrode for an all-solid-state battery according to claim 1, wherein the graphene has an average particle size of 4 to 15 $\mu$m.

4. The positive electrode for an all-solid-state battery according to claim 1, wherein the graphene has a BET specific surface area of 20 to 35 m$^2$/g.

5. The positive electrode for an all-solid-state battery according to claim 1, wherein a ratio B/A, where B ($\mu$m) is an average particle size of the graphene, and A ($\mu$m) is an average particle size of the positive electrode active material, is 1 to 4.

6. The positive electrode for an all-solid-state battery according to claim 1, wherein a content percentage of the positive electrode active material in the positive electrode mixture is 50% by mass or more and 78% by mass or less.

7. The positive electrode for an all-solid-state battery according to claim 1, wherein the solid electrolyte comprises a sulfide-based solid electrolyte, and
   the positive electrode active material has core portions that substantially act as an active material, and surface layers that each cover the surface of corresponding one of the core portions to suppress reaction between the core portions and the sulfide-based solid electrolyte.

8. The positive electrode for an all-solid-state battery according to claim 7, wherein the surface layers each include a lithium-containing niobium oxide.

9. An all-solid-state battery comprising an electrode body in which a positive electrode, a solid electrolyte layer, and a negative electrode are stacked,
wherein the positive electrode is the positive electrode for an all-solid-state battery according to any one of claims 1 to 8.

10. The all-solid-state battery according to claim 9, wherein at least one selected from the group consisting of the solid electrolyte layer and the negative electrode comprises a sulfide-based solid electrolyte.

11. A method for producing the all-solid-state battery according to claim 9, the method comprising a step to form a positive electrode,
wherein the step to form a positive electrode comprises:

a first mixing step to mix a positive electrode active material with part of a solid electrolyte to be included in a positive electrode mixture to form a first composition;
a second mixing step to mix the first composition, the remaining solid electrolyte that has not been used for the formation of the first composition, and a carbon material that contains graphene to prepare a positive electrode mixture such that a content percentage of the solid electrolyte in the positive electrode mixture is 17 to 46% by mass, and a content percentage of the graphene in the positive electrode mixture is 1.5 to 7% by mass, and a percentage of the graphene in the carbon material is 70% by mass or more; and
a pressurization step to mold the positive electrode mixture under a surface pressure of 1000 MPa or more to form a molded body of the positive electrode mixture.

12. The method according to claim 11, wherein a ratio B/A, where B ($\mu$m) is an average particle size of the graphene, and A ($\mu$m) is an average particle size of the positive electrode active material, is 1 to 4.

13. The method according to claim 11, wherein the pressurization step to form the molded body of the positive electrode mixture includes a first pressurization step to mold the positive electrode mixture under a surface pressure of 500 MPa or less to form a preliminarily molded body of the positive electrode mixture, and a second pressurization step to mold the preliminarily molded body of the positive electrode mixture under a surface pressure of 1000 MPa or more.

14. The method according to claim 13, further comprising a step to pressurize a solid electrolyte under a surface pressure of 120 MPa or less to form a preliminarily molded body of the solid electrolyte for formation of a solid electrolyte layer,
wherein the preliminarily molded body of the positive electrode mixture is formed on one side of the preliminarily molded body of the solid electrolyte.

15. The method according to claim 11, wherein the solid electrolyte included in the first composition is a sulfide-based solid electrolyte.

FIG. 1

100

103

101a

101

101

102

FIG. 2

100

103

230

101

101

102

FIG. 3

100

103

231

101

101

102

FIG. 4

100

103

220

101

101

102

231

FIG. 5

100

103

221

101

101

231

102

**FIG. 6**

100

103

101a

231

101

101

221

102

**FIG. 7**

**FIG. 8**

**FIG. 9**

## INTERNATIONAL SEARCH REPORT

| International application No. |
|---|
| **PCT/JP2023/001461** |

| | |
|---|---|
| **A.** | **CLASSIFICATION OF SUBJECT MATTER** |
| | ***H01M 4/13***(2010.01)i; ***H01M 4/139***(2010.01)i; ***H01M 4/36***(2006.01)i; ***H01M 4/62***(2006.01)i; ***H01M 6/18***(2006.01)i; ***H01M 10/052***(2010.01)i; ***H01M 10/0562***(2010.01)i; ***H01M 10/058***(2010.01)i |
| | FI: H01M4/13; H01M4/62 Z; H01M10/0562; H01M10/052; H01M4/36 C; H01M4/139; H01M10/058; H01M6/18 Z |

According to International Patent Classification (IPC) or to both national classification and IPC

| | |
|---|---|
| **B.** | **FIELDS SEARCHED** |

Minimum documentation searched (classification system followed by classification symbols)

H01M4/13; H01M4/139; H01M4/36; H01M4/62; H01M6/18; H01M10/052; H01M10/0562; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2013/051308 A1 (TOHOKU UNIVERSITY) 11 April 2013 (2013-04-11)<br>entire text, all drawings | 1-15 |
| A | KR 10-2068073 B1 (KOREA INSTITUTE OF INDUSTRIAL TECHNOLOGY) 20 January 2020 (2020-01-20)<br>entire text, all drawings | 1-15 |
| A | JP 2021-039887 A (MAXELL HOLDINGS, LIMITED) 11 March 2021 (2021-03-11)<br>entire text, all drawings | 1-15 |
| P, X | WO 2022/080083 A1 (MAXELL, LIMITED) 21 April 2022 (2022-04-21)<br>claims, paragraphs [0124]-[0207] | 1, 6-10 |
| P, A | claims, paragraphs [0124]-[0207] | 2-5, 11-15 |

| | |
|---|---|
| ☐ Further documents are listed in the continuation of Box C. | ☑ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/001461**

| Patent document cited in search report | | | Publication date (day/month/year) | Patent family member(s) | | | Publication date (day/month/year) |
|---|---|---|---|---|---|---|---|
| WO | 2013/051308 | A1 | 11 April 2013 | US<br>all<br>WO | 2014/0377621<br><br>2013/051302 | A1<br><br>A1 | |
| KR | 10-2068073 | B1 | 20 January 2020 | (Family: none) | | | |
| JP | 2021-039887 | A | 11 March 2021 | (Family: none) | | | |
| WO | 2022/080083 | A1 | 21 April 2022 | CN<br>claims, paragraphs [0150]-[0276] | 115428191 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014112540 A
- JP 2012243645 A
- WO 201926940 A
- WO 2020070958 A
- WO 2020070955 A